# EUROPÄISCHE PATENTSCHRIFT

(11) **EP 2 013 598 B1**
(45) Veröffentlichungstag und Bekanntmachung des Hinweises auf die Patenterteilung: **29.02.2012**
(21) Anmeldenummer: 07724703.9
(22) Anmeldetag: 27.04.2007
(51) Int. Cl.: G01L 1/22

(54) **KRAFTMESSVORRICHTUNG ZUR MESSUNG DER KRAFT BEI FESTKÖRPERAKTOREN, VERFAHREN ZUR MESSUNG EINER KRAFT SOWIE VERWENDUNG DER KRAFTMESSVORRICHTUNG**
FORCE-SENSING DEVICE FOR MEASURING FORCE ON SOLID STATE ACTUATORS, METHOD FOR MEASURING FORCE, AS WELL AS USE OF FORCE-SENSING DEVICE
DISPOSITIF DE MESURE DE FORCE POUR MESURER LA FORCE DANS LE CAS D'ACTIONNEURS MONOLITHIQUES, PROCÉDÉ DE MESURE D'UNE FORCE ET UTILISATION DU DISPOSITIF DE MESURE DE FORCE

(30) Priorität: 28.04.2006 DE 102006019942
(43) Veröffentlichungstag der Anmeldung: 14.01.2009
(73) Patentinhaber: Fraunhofer-Gesellschaft zur Förderung der angewandten Forschung e.V., 80686 München (DE)
(72) Erfinder: LÜTHJE, Holger, 25469 Halstenbek (DE); BIEHL, Saskia, 66123 Saarbrücken (DE); MAYER, Dirk, 64295 Darmstadt (DE); MELZ, Tobias, 64285 Darmstadt (DE); HEROLD, Sven, 64823 Darmstadt (DE)
(74) Vertreter: Reitzle, Helmut
(86) Internationale Anmeldenummer: PCT/EP2007/003776
(87) Internationale Veröffentlichungsnummer: WO 2007/124940

(56) Entgegenhaltungen:
- DE-A1- 10 217 284
- DE-A1- 10 253 178
- DE-A1- 10 361 481
- DE-A1- 19 954 164
- US-B1- 6 271 621

## Beschreibung

Festkörperaktoren z.B. Piezoaktoren, insbesondere in Form von Piezostapelaktoren aber auch magnetostriktive oder elektrostriktive Aktoren, sind wesentliche Stellglieder innovativer aktiver, besonders adaptronischer Systeme und besitzen ein großes Verbreitungspotenzial. Ein bekanntes Anwendungsgebiet von Piezoaktoren sind die modernen Einspritzsysteme z.B. für Common Rail Dieselfahrzeuge. Ein ungelöstes Problem bei diesen Aktoren, das z.Zt. weitere Anwendungen behindert, ist die fehlende Kenntnis der aktuellen Kraft in Wirkrichtung, die der Aktor in der jeweiligen Anwendung aufbringt bzw. erfährt. Die Verwendung von mechanisch seriell geschalteten Kraftsensormodulen auf Basis von DMS (Dehnungsmessstreifen) oder piezokeramischen Kraftsensoren führt zu zusätzlicher Masse oder Bauvolumen und/oder Elastizität sowie Kosten. Herkömmliche piezoelektrische Sensoren können zudem nicht bei statischen Messungen eingesetzt werden und erlauben somit keine Messung der häufig gewünschten mechanischen Vorlasteinstellung des Aktors. Die Verwendung einer Scheibe eines Stapelaktors (Stand der Technik) beinhaltet den Nachteil, dass neben der Kraftmessung in aktorischer Wirkrichtung auch Querdehnungskomponenten miterfasst werden und die Messung verfälschen. Vorteilhaft wäre eine kompakte, statisch bis hochdynamisch wirkende Kraftmessung mit sehr hoher Steifigkeit.

Piezoaktoren werden derzeit für unterschiedliche Anforderungen angeboten. Dabei wird die Längung z.T. mit seitlich angeklebten DMS gemessen. Eine Kraftmessung kann nur durch zusätzlich seriell in den Kraftfluss eingebaute Kraftmessdosen oder seriell oder parallel geschaltete Dehnungssensoren erfolgen. Für Laboraufbauten wurden z.B. auch piezoelektrische Kraftmessfolien verwandt. Dabei gereichen aber insbesondere eine geringe Belastbarkeit sowie hoher Verschleiß zum Nachteil.

Bekannt sind auch piezoelektrische Sensoren aus Keramik-Plättchen oder -Fasern, ebenfalls gehäust oder als Halbzeuge ausgeführt. Hierbei ist jedoch nachteilig, dass keine statischen Messungen durchgeführt werden können.

Ferner werden piezoresistive Sensoren nach dem Längungs-Stauchungs-Prinzip (auf deformierbare Grundkörper aufgebracht) verwandt.

Adaptronische und mechatronische Systeme werden häufig auf Basis von Festkörper-, häufig piezoelektrischer Aktorik ausgelegt. Beispiele sind in den Patentschriften DE 195 27 514 (Schnittstelle für die Schwingungsreduktion in strukturdynamischen Systemen) und DE 101 17 305 (Verfahren zur Verminderung der Schallübertragung in Fahrzeugen, Fahrwerk für Fahrzeuge und Aktuator) erwähnt.

Für den hochdynamischen aktiven Betrieb z.B. die hochdynamische Prüfung von Kleinbauteilen unter statischer Vorlast ist insbesondere eine Kraftsensorik von Interesse, die gleichzeitig statische und dynamische Kräfte messen kann. Da sich die Kraftsensorik direkt im Kraftfluss befindet, soll sie zudem über eine hohe Steifigkeit verfügen, um Aktorhub und - kraft optimal vom Aktor auf den Prüfkörper zu übertragen.

Kraftsensoren sind bereits in verschiedenen Bauformen und nach diversen Messprinzipien kommerziell erhältlich. Piezoelektrische Kraftsensoren (z.B. Kistler Instrumente AG Winterthur: Quartz-Messunterlagsscheiben 9001A-9071A, Kistler Instrumente AG Winterthur, Datenblatt, Winterthur, 2004) sind sehr empfindlich, besitzen eine relativ hohe Steifigkeit und sind in kompakter Form erhältlich, jedoch aufgrund des Messprinzips (Ladungsmessung) nur zur Messung dynamischer Kräfte geeignet. Alternativ dazu existieren Kraftsensoren auf Basis von Dehnungsmessstreifen (z.B. HBM GmbH: U9B - Force Traducer, Hottinger Baldwin Messtechnik GmbH, Datenblatt, Darmstadt, 2004; HBM GmbH: Z30 - Force Traducer). Diese sind auch zur Messung statischer Kräfte geeignet, besitzen jedoch nur eine geringe eigene Steifigkeit. Ferner besitzen alle kommerziell erhältlichen Sensoren eine nicht zu vernachlässigende Masse, welche die Anwendung in der hochdynamischen Prüftechnik erschwert.

Einige Schriften befassen sich mit der Ansteuerung von Piezoaktuatoren, wie z.B. die Druckschriften US 5,578,761 (Adaptive Piezoelectric Sensoriactuator) und US 4,491,759 (Piezoelectric Vibration Exciter, Especially for Destructive Material Testing).

Nur wenige Veröffentlichungen beschäftigen sich mit der Integration einer Kraftsensorik in das Aktorsystem. Diesbezüglich ist z.B. die Patentschrift US 5,347,870 (Dual Function System Having a Piezoelectric Element) von Relevanz. Dabei wird auch der Aktor gleichzeitig als Sensor genutzt. Dies ermöglicht jedoch keine statischen Messungen und Vorspannungen. Eine oberflächenintegrierte Kraftsensorik auf Basis harter, sehr dünner DLC (Diamond Like Carbons) Schichten, die Gegenstand der vorliegenden Erfindung ist, wird jedoch in keiner dieser Arbeiten vorgeschlagen. Vorteile sind daher die resultierenden, sehr hohen Steifigkeiten der Kraftsensorik, die einen Dehnungsverlust des Aktors vermeiden.

Die Herstellung der Schichten kann mittels herkömmlicher Plasma-PVD und/oder Plasma-CVD Verfahren oder durch Kombination beider Verfahren erfolgen. Dazu können handelsübliche Mehrtargetsputteranlagen oder Plasma CVD Anlagen eingesetzt werden.

Eine nähere Beschreibung zum Stand der Technik befindet sich in folgenden Patentschriften: DE 199 54 164 (Verwendung als Kraftsensor), DE 102 43 095 (Wälzlager), DE 102 17 284 (Vorrichtung kraftschlüssiger Verbindungen), DE 102 53 178 (Multifunktionsschicht für Kraft- und Temperaturmessungen).

Die bisher bekannten Verwendungen der amorphen Kohlenstoffschicht mit multifunktionalen Eigenschaften offenbaren keine Anwendungen als Kraftsensor bei Festkörperaktoren.

Zunehmende Miniaturisierung nicht nur elektronischer sondern insbesondere auch mechanischer Bauteile führt zur Notwendigkeit, auch deren Lebensdauer und Zuverlässigkeit mit entsprechenden Methoden zu untersuchen und zu bewerten, um so die Entwicklungsprozesse zu optimieren. Zudem rücken in vielen Anwendungen Vibrationsprobleme inklusive Maßnahmen zur aktiven Kontrolle zur Minderung von Vibrationen zunehmend in den Blickpunkt, da diese die mit technischen Verfahren erreichbaren Fertigungstoleranzen, messtechnische Auflösungen, Lebensdauer und Komfort begrenzen. Hierzu muss gegenüber klassischen Auslegungsmethoden ein wesentlich breiterer Frequenzbereich betrachtet werden, wobei der erfindungsgemäße Kraftsensor aus einer dünnen, massearmen Kohlenstoffschicht gebildet wird und große Vorteile gegenüber dem Stand der Technik besitzt.

Sowohl für die experimentelle Betriebslastsimulation im höherfrequenten Bereich wie auch die aktive Kontrolle von Vibrationen bis in den strukturakustischen Bereich werden Konzepte zur kontrollierten mechanischen Lasteinleitung immer wichtiger. Hierfür eignen sich Festkörperaktoren, sehr häufig piezokeramische Stapelaktoren, die statische bis hochdynamische Lasten generieren können. Für einen geregelten Betrieb, beispielsweise einer Vibrationsdämpfung, ist die Messung der wirkenden bzw. eingeleiteten Kraft von wesentlicher Bedeutung. Diese Kraftmessung erfolgt vorteilhaft unmittelbar am/im Aktor, d.h. unmittelbar im Kraftfluss liegend. Hierbei ist eine sehr hohe Steifigkeit des Sensors unabdingbar, da eine Elastizität in Lastpfad einer Verminderung der aktorischen Wirksamkeit entspricht, die zu vermeiden ist. Gleichzeitig soll die Kraftmessung von statisch bis hochdynamisch zu realisieren sein, um sowohl mechanische Vorspannlasten wie auch die Betriebslasten messen zu können. Bekannte Lösungen wie auch kapazitive oder piezokeramisch basierte Kraftsensoren sind gegenüber der DLC-Schichtlösung immer weniger steif. Zudem ist die Messung statischer Lasten mit piezokeramischen Lösungen nicht machbar.

Die Lösung mittels Einsatz einer piezokeramischen Schicht Kräfte zu messen, wie es im Stand der Technik beschrieben wird, bringt zusätzlich den Nachteil, dass die axiale Kraftmessung durch Querkontraktionseffekte verfälscht wird.

Ausgehend hiervon war es Aufgabe vorliegender Erfindung, einen Kraftsensor bereitzustellen, der die beschriebenen Nachteile nicht aufweist.

Die Aufgabe wird durch die Kraftmessvorrichtung mit den Merkmalen des Anspruchs 1 gelöst. Ebenso wird ein Verfahren zum Messen einer Kraft mit den Merkmalen des Anspruchs 15 bereitgestellt. Des Weiteren wird die Verwendung des erfindungsgemäßen Dünnschichtsensors in Anspruch 21 beschrieben. Die abhängigen Ansprüche nennen jeweils die vorteilhaften Weiterbildungen.

Erfindungsgemäß wird eine neuartige Kraftmessvorrichtung vorgeschlagen, die eine auf einem Träger angeordnete amorphe Kohlenstoffschicht mit piezoresistiven Eigenschaften (piezoresistive Schicht) umfasst.

Vorteilhafterweise ist der Träger ein Festkörperaktor, der v.A. als Piezostapelaktor ausgebildet ist.

Der Träger kann weiterhin z.B. in Form eines Metallträgers, bevorzugt eines Stahlträgers oder eines Keramikträgers vorliegen. Beispielsweise kann ein mit Metall beschichteter Keramikring, ein Stahlring oder eine metallische Folie verwendet werden, wenn man die vollflächige Belastung messen möchte.

In einer vorteilhaften Ausführungsform kann der Träger auch als elektromagnetischer, hydraulischer und/oder pneumatischer Aktor ausgebildet sein.

Unter amorphen Kohlenstoffschichten im erfindungsgemäßen Sinne werden Schichten aus amorphem Kohlenstoff sowohl mit als auch ohne Wasserstoff sein. Gemäß der DE 199 54 164 sind derartige, aus amorphen Kohlenstoff bestehende Schichten, z.B. unter den Bezeichnungen a-C, a-:CH, i-CH, a-C:H:Me, DLC (Diamond Like Carbons), Me:DLC, bekannt. Bevorzugt sind die amorphen Kohlenstoffe als multifunktionellen Schichten ausgebildet und enthalten a-C, a-:CH, i-CH, a-C:H:Me, DLC, Me:DLC und/oder Mischungen hieraus.

Diamantartige Kohlenwasserstoffe (DLC) sind aufgrund ihrer hohen Härte besonders vorteilhaft. Durch Aufbringen der diamantartigen Kohlenwasserstoffe als dünne Schicht wird eine Messung von Normalkräften überraschenderweise praktisch ohne Änderung der Systemsteifigkeit ermöglicht. Somit lassen sich Kraftmessvorrichtungen konstruieren, die z.B. als Kraft/Druck-Sensor mit extrem hoher Steifigkeit von kleiner 10 nm/kN und exzellenten tribologischen Eigenschaften herstellen. Diese tribologischen Eigenschaften lassen sich insbesondere durch die hohe Verschleißfestigkeit (2·10⁻¹⁵ bis 10·10⁻¹⁵ m³/Nm; im Vergleich dazu besitzt gehärteter Stahl (100Cr6) ca. den 100-fach höheren Verschleißwert (220·10⁻¹⁵ m³/Nm)) sowie hoher thermischer Stabilität (bis mindestens 150 °C, vorzugsweise mind. 200 °C) quantifizieren. Erfindungsgemäß können auch Schichten mit zum Teil sp³ gebundenem Kohlenstoff mit und ohne Zusätze/Dotierungen aus Metallen, Silizium, Fluor, Bor, Germanium, Sauerstoff verwendet werden.

Die amorphen Kohlenstoffschichten besitzen vorzugsweise eine Härte von mindestens 10 GPa, besonders bevorzugt von mindestens 15 GPa und werden im Dickenbereich von 0,1 bis 30 µm, bevorzugt im Dickebereich von 1 bis 10 µm angewandt.

Ein weiterer Vorteil der multifunktionalen, amorphen Kohlenstoffschichten besteht darin, dass sie sich durch sehr günstige tribologische Eigenschaften sowie eine hohe mechanische Verschleißfestigkeit auszeichnet und thermisch bis mindestens 150 °C, vorzugsweise bis 200 °C belastet werden können.

In einer alternativen Ausführungsform kann bei elektrisch isolierenden Trägermaterialien zwischen dem Träger und der amorphen Kohlenstoffschicht zusätzlich eine Metallschicht aufgebracht sein. Die Metallschicht ermöglicht somit elektrische Kontaktierung zur Bestimmung elekrischer Größen wie Spannung und/oder Stromstärke und schließlich darüber die Bestimmung des Widerstands der amorphen Kohlenstoffschicht.

Dabei bewegt sich die aufgetragene Dicke der Metallschicht zwischen 50 und 500 nm. Grundsätzlich können zur Beschichtung alle elektrisch leitenden Stoffe eingesetzt werden, vorzugsweise kommen jedoch Metalle (v.A. Übergangsmetalle) und/oder Halbmetalle und/oder Legierungen hieraus zur Anwendung.

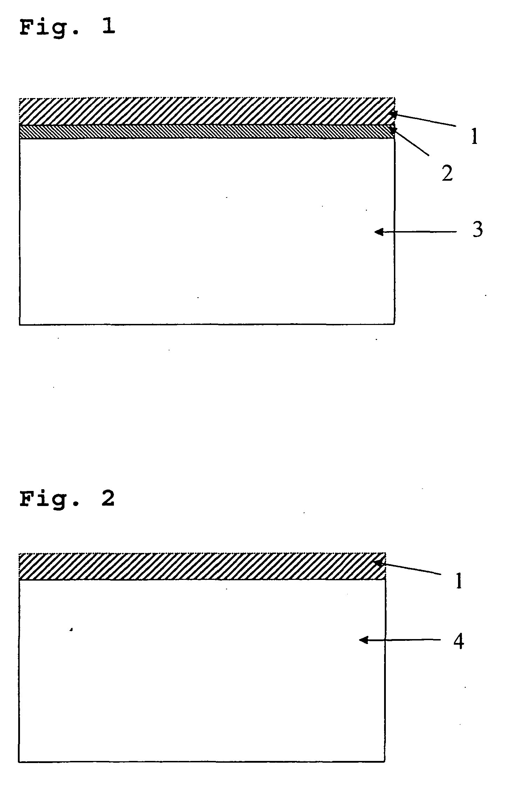

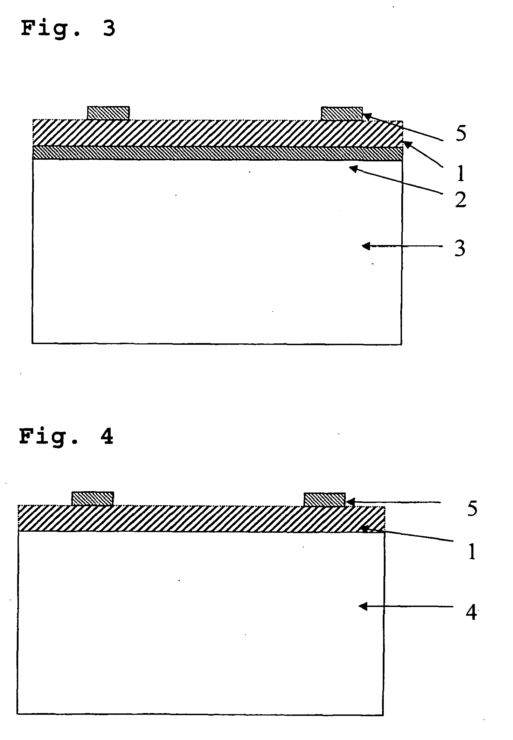

Diese Ausführungsform kommt v.A. für den Sensoraufbau, basierend auf einem Keramikträger (vgl. Figur 1 und 3) in Frage. Auf die Oberseite der Metallschicht ist die piezoresistive Schicht abgeschieden.

In einer weiteren Ausführungsform weist der Kraftmessvorrichtung zusätzlich zwischen dem Substrat und der piezoresistiven Schicht eine Isolationsschicht und/oder eine Verschleißschutzschicht auf, die Materialien wie z.B. AlN oder Al₂O₃ enthalten kann. Die Schichtdicke der Isolationsschicht und/oder Verschleißschutzschicht ist dabei zwischen 0,5 und 500 µm, vorzugsweise zwischen 2 und 10 µm bemessen.

Diese Ausführungsform ist v.A. dann vorteilhaft, wenn ein metallisch leitender Träger, beispielsweise ein Stahlträger verwendet wird. Eine beispielhafte Ausführungsform ist in den Figuren 2 und 4 dargestellt.

Weiterhin besteht die Möglichkeit einer weiteren Ausführungsform der Kraftmessvorrichtung, bei der zusätzlich auf der piezoresistiven Sensorschicht lokale Elektrodenstrukturen aufgebracht sind (siehe auch Figuren 3 bis 5). Diese können auch in Form einer Folie aufgebracht sein, wie in den Figuren 8 und 9 dargestellt.

Weiterhin kann es vorteilhaft sein, wenn zusätzlich in die Kraftmessvorrichtung mindestens ein Temperatursensor integriert ist. Somit kann v.A. bei Messungen von hochdynamischen Kräften, also sich zeitlich schnell ändernden Kräften, die Temperaturcharakteristik der Kraftmessvorrichtung, d.h. der Einfluss der Temperatur auf den elektrischen Widerstand der amorphen Kohlenstoffschicht, berücksichtigt werden.

Die im Vorangehenden beschriebenen Kraftmessvorrichtungen können prinzipiell jede geometrische Ausführungsform annehmen, besonders bevorzugt ist die Form eines Ringes.

Erfindungsgemäß wird ebenso ein Verfahren zur Messung einer Kraft mithilfe der Kraftmessvorrichtung bereitgestellt.

Durch den erfindungsgemäßen Aufbau der Kraftmessvorrichtung sind nun Messungen sowohl dynamischer als auch statischer Kräfte möglich. Damit wird überraschenderweise eine weit über den Stand der Technik hinausgehende Anwendung von Festkörperaktoren ermöglicht. Für hochdynamische Messungen liegt der Vorteil dieses Kraftsensors darin, dass über die direkt auf den Piezoaktor aufgebrachte Schicht eine Messung mit hoher Präzision durchgeführt werden kann. Da die Schicht zum größten Teil aus Kohlenstoff als sehr leichtes Element besteht, ist besteht ein weiterer Vorteil darin, dass die piezoresistive Schicht sehr massearm ist.

Die Messung der aktuellen, auf die Kraftmessvorrichtung wirkenden Kraft erfolgt mit Hilfe einer Widerstandsmessung der piezoresistiven Schicht. Bei der Messung erfolgt der Stromfluss durch die Sensorschicht und wird beispielsweise an einem im Randbereich der Metallschicht kontaktierten Draht abgegriffen.

In einer anderen Ausführungsform kann der zur Widerstandsmessung der piezoresistiven Schicht verwendete Stromfluss auch über den Stahlträger abgegriffen werden.

Die Messung der Kraft kann dabei, je nach Ausführungsform des Kraftsensors, vollflächig - also integral - oder lokal aufgelöst gemessen werden. Ortsaufgelöste Messungen können durch Einbringen lokaler Elektrodenstrukturen auf der Sensorschicht ermöglicht werden.

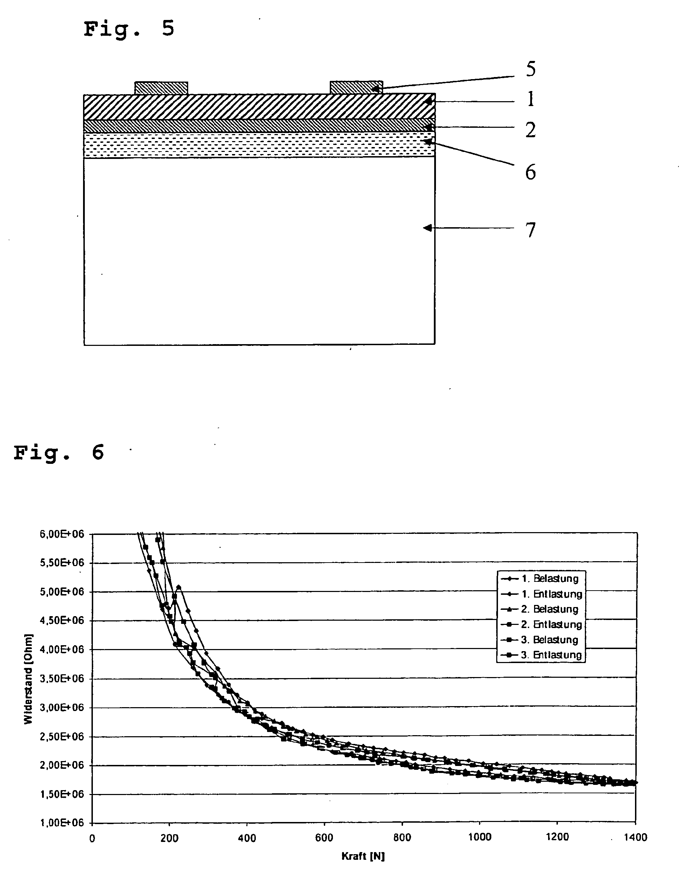

Das typische piezoresisitve Verhalten der amorphen Kohlenstoffschicht bei vollflächiger Belastung ist in Figur 6 dargestellt. Darin sind die für die Sensorschicht charakteristischen Be- und Entlastungszyklen bei vollflächiger Kontaktierung der Sensorschicht zu erkennen, die eine sehr gute Reproduzierbarkeit aufweisen.

Neben der Kraftmessung muss insbesondere bei hochdynamischen Messungen auch die Temperatur in der Kontaktfläche gemessen werden. Diese Messung dient zum einen der Kompensation der Temperaturcharakteristik des Kraftsensors, aber auch der Kontrolle und Optimierung der Aktoransteuerung. Dadurch kann effektiv die Abhängigkeit des Widerstandes der piezoresistiven Schicht von der Temperatur ausgeglichen werden. Temperaturschwankungen können bei erhöhten Drücken auftreten. Andererseits wird aber somit auch eine Einsatzmöglichkeit der Kraftmessvorrichtung über einen weiten Temperaturbereich ermöglicht.

Erfindungsgemäß werden ebenso Anwendungsmöglichkeiten der Kraftmessvorrichtungen bereitgestellt. Die hier vorgeschlagenen diamantartigen kraftsensorischen Schichten erlauben den Aufbau von aktiven Strukturinterfaces, vorspannungsgeregelte Wälzlager, Haltekraftregelungen, Werkzeugmaschinen, Druckwalzen, Dämpfungsvorrichtungen, oder Justiervorrichtungen.

Ebenso ist eine Anwendung in aktiven Vibrationsdämpfungssystemen denkbar.

Ebenso wird erfindungsgemäß ein Verfahren zur Herstellung eines Kraftmessvorrichtung bereitgestellt. Bei dem Verfahren werden auf einer Folie vorstrukturierten lokalen Elektrodenstrukturen und/oder die Temperatursensoren in den Kraftsensor eingebaut.

Die Erfindung, deren Verwendung sowie die erfindungsgemäßen Verfahren zur Messung einer Kraft sowie zur Herstellung der Erfindung sollen anhand unten aufgeführer Figuren, sowie der beispielhaften Beschreibung näher erläutert werden, ohne die Erfindung auf
die dargestellten Beispiele einzuschränken.
Figur 1 zeigt eine ringförmige Ausführungsform der erfindungsgemäßen Kraftmessvorrichtung mit einem keramischen Aktorring 3 als Substrat, einer darauf aufgebrachten Metallschicht 2 sowie einer darauf aufgetragenen piezoresistiven Schicht 1.
Figur 2 zeigt ebenfalls eine ringförmige Ausführungsform der erfindungsgemäßen Kraftmessvorrichtung mit einem Stahlträger 4 als Substrat und einer darauf aufgebrachten piezoresistiven Schicht 1.
Figur 3 zeigt eine ringförmige Ausführungsform der erfindungsgemäßen Kraftmessvorrichtung wie in Figur 1 dargestellt, mit zusätzlich aufgebrachten lokalen Elektrodenstrukturen 5.
Figur 4 zeigt eine ringförmige Ausführungsform der erfindungsgemäßen Kraftmessvorrichtung wie in Figur 2 dargestellt, mit zusätzlich aufgebrachten lokalen Elektrodenstrukturen 5.
Figur 5 zeigt eine Ausführungsform der erfindungsgemäßen Kraftmessvorrichtung, basierend auf einem PZT-Element 7 mit zusätzlicher Isolationsschicht und/oder Verschleißschutzschicht 6 sowie einer homogenen Metallschicht 2, piezoresistiver Sensorschicht 1 und lokalen Elektrodenstrukturen 5.
Figur 6 zeigt typische Messkurven der Widerstandsmessung in Abhängigkeit der wirkenden Kraft bei vollflächiger Belastung des Sensors.

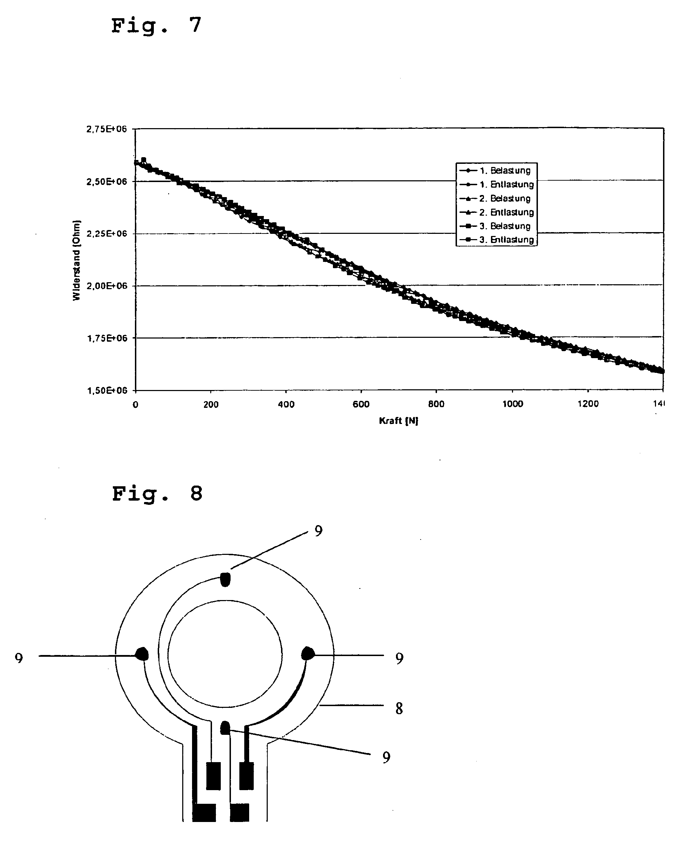

Figur 7 zeigt typische Messkurven der Widerstandsmessung in Abhängigkeit der wirkenden Kraft bei lokal strukturierter Belastung einer Ausführungsform des Sensors mit lokalen Elektrodenstrukturen.
Figur 8 zeigt eine Folie 8, mit lokalen, vorstrukturierten Elektrodenstrukturen 9, die eine lokale Messung der Kraft erlauben.

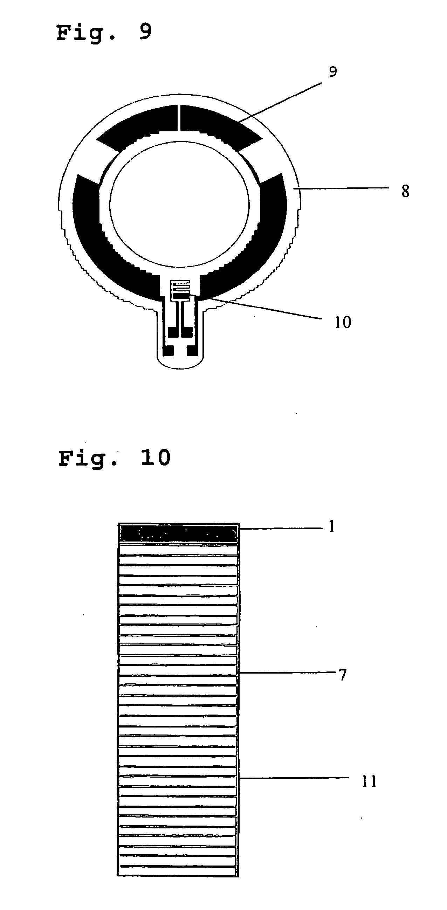

Figur 9 zeigt eine Folie 8 mit lokalen Elektrodenstrukturen 9 und integriertem Temperatursensor 10.
Figur 10 zeigt eine Aktor-Sensor-Einheit, bestehend aus einer piezoresistiven Sensorschicht 1 und einem Piezostapelaktor 7; beide Bestandteile befinden sich in einem Gehäuse 11.

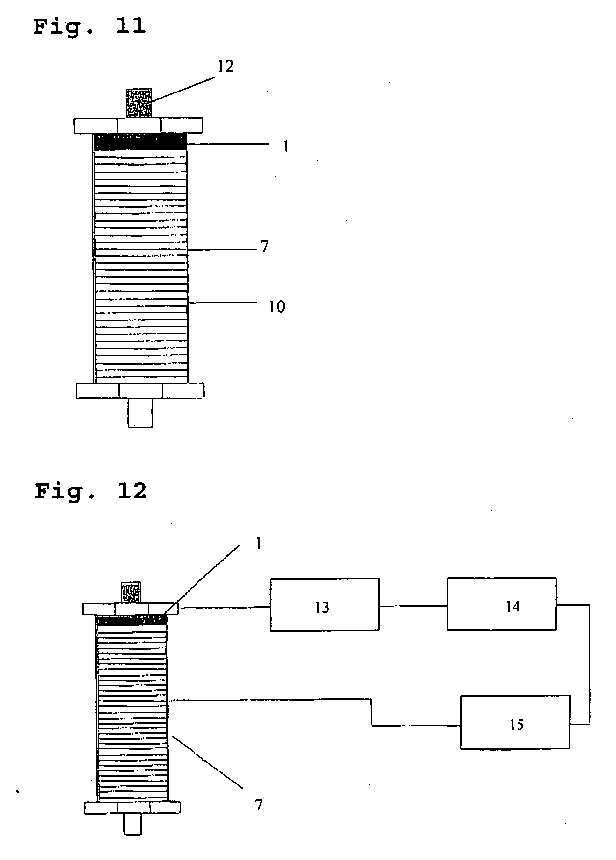

Figur 11 zeigt ebenfalls eine Aktor-Sensor-Einheit wie in Figur 10, wobei hier zusätzlich noch eine Schraube zur Justierung der Vorspannung 12 der Einheit vorhanden ist.
Figur 12 zeigt die Aktor-Sensor-Einheit wie in Figur 11 in einem selbstregulierenden System. Dazu wird das von der piezoresistiven Sensorschicht 1 erzeugte Messsignal zunächst in einem Messverstärker 13 vorverstärkt, um dann weiter in einem Integrierverstärker 14 verarbeitet zu werden. Zur Regelung des Piezostapelaktors 7 wird das Signal abschließend weiter in einem Leistungsverstärker 15 verstärkt.

Es ist möglich die Kraftmessvorrichtung auf einem Träger bestehend aus Keramik 3, einem Piezoaktorstapelelement 7 oder Metall, beispielsweise Stahl 4, aufzubauen (Figuren 1 bis 5). Stahl als Grundmaterial hat den Vorteil, dass der Beschichtungsschritt mit Metall entfallen kann. Der Ring kann direkt mit der sensorischen Kohlenwasserstoffschicht 1 belegt werden, um integral die Kräfte aufzunehmen. Man könnte auf der Sensorschicht auch strukturiert Elektroden 5 aufbringen um ortsaufgelöst die Kräfte bzw. Drücke zu messen.

Da Aktorelemente auch bereits eine Metallschicht 2 auf der Oberfläche aufweisen können, kann ein Sensoraufbau auch so aussehen, dass auf das PZT-Substrat als erstes eine Isolationsschicht und/oder Verschleißschutzschicht 6 aufgebracht wird (Figur 5). Dies kann beispielsweise AlN oder Al₂O₃ sein. Dadurch ist der Sensoraufbau entkoppelt von dem am Aktorstack angelegten Potenzial. Darauf kann homogen eine Metallschicht 2 abgeschieden werden. Auf diese wird nachfolgend die piezoresistive Schicht 1 aufgebracht. Bei einer homogenen Grundbeschichtung durch Metall 2 müssen einzelne lokale Elektroden 5 auf die Sensorschicht abschieden werden, wenn lokal aufgelöst Druckmessungen durchzuführen werden sollen. Ohne diese Topelektroden 5 erfolgt eine integrale Messung der Kraft.

Als Alternative ist es auch möglich den strukturierten Sensorring mit einer Isolations- und Verschleißschutzschicht 6 direkt zu beschichten. Die Schichtdicke für diese Schutzschicht liegt im Bereich von einigen Mikrometern und bringt den zusätzlichen Vorteil mit sich, dass kein weiteres Element in den Aktoraufbau integriert werden muss.

Die Kraftsensoren (z.B. aus Figur 1 und 2) können vollflächig belastet werden, um die darauf wirkenden Kräfte zu bestimmen. Die Kraft wird somit integral bestimmt. Dabei ergibt sich eine nichtlineare Abhängigkeit des Widerstandes der piezoresistiven Seneorschicht in Abhängigkeit von der wirkenden Kraft (Figur 6).

Da viele multifunktionale Festkörperaktoren wie z.B. keramische Piezoaktoren nur Druckbelastungen aufnehmen können, ist es bei größeren Aktoren neben der integralen Messung der Kraft auch sinnvoll, die Kraftverteilung auf der Oberfläche zu bestimmen und gegebenenfalls die Momenteneinleitung und den Aufbau von gefährlichen Scherkräften und lokalen Belastungsspitzen regelungstechnisch zu vermeiden.

In Figur 7 ist zu erkennen, dass es durch lokal aufgebrachte Elektrodenstrukturen zu einer Linearisierung der Messkurve kommt. In einer beispielhaften Ausführungsform wie in Fig. 3 dargestellt, fließt der Strom über die Elektrode 5 durch die Sensorschicht 1 und wird an der Metallschicht 2 abgegriffen. Als Gegenkörper kann ein unbeschichteter Keramikring 3 verwendet werden.

Ein weg neben der direkten Abscheidung von lokalen Elektrodenstrukturen 5 auf der Sensorschicht 1 zur ortsaufgelösten Kraftmessung ist der Einbau einer Folie 8. Diese Folie 8 hat auf ihrer Oberfläche lokale Elektrodenstrukturen. Ein mögliches Design ist in Fig. 8 dargestellt. Das Design der Strukturen kann an die Messaufgabe schnell angepasst werden, da diese strukturierten Folien im lift-off-Verfahren hergestellt werden können. Die Integration eines Temperatursensors 10 auf der Folie ist ebenfalls möglich (Fig. 9).

Diese Folien können in direkten Kontakt mit einer einfachen homogen beschichteten Sensorschicht 1 auf einen Ring gebracht werden ohne mit diesem verbunden zu sein. Dann hat man die Möglichkeit in einen Aktuator unterschiedliche Folien einzubauen und diese je nach Messaufgabe zu tauschen. Man kann aber auch diese strukturierten Kunststofffolien 8 oder 9 mit zwei Ringen zu einem gekapselten Sensorsystem verbinden. Dabei ist nur der Ring mit der Sensorschicht 1 belegt, der in Kontakt mit den metallischen Elektrodenstrukturen 5 steht. Der zweite Ring kann unbeschichtet sein.

Kraftgeregelte Piezoaktoren ermöglichen innovative adaptronische Systeme. Beispiele sind aktive Strukturinterfaces (vgl. DE 103 614 81 oder DE 102 004 019 2), die z.B. bei der Lagerung von Aggregaten den Körperschallfluss kontrollieren sollen oder vorspannungsgeregelte Wälzlager, die z.B. bei Werkzeugspindeln zu einer Genauigkeitsverbesserung führen. Weiterhin sind Anwendungen in der Robotik/Montage, z.B. in Haltekraftregelungen, bei Werkzeugmaschinen, z.B. zur Spannkraftüberwachung, in Printmedien, z.B. zur Abstandsjustage bei Druckwalzen oder bei der Lebensmittelverarbeitung, z.B. zur Messernachstellung denkbar.

Darüber hinaus sind die Ergebnisse auch auf andere Aktoren, z.B. elektromagnetische, hydraulische und pneumatische Aktoren übertragbar.

Entsprechend Figur 12 soll der Aufbau einer aktiven Vibrationsdämpfung unter Einbindung der in der Erfindung beschriebenen Aktor-Sensor-Einheit erläutert werden.

Die Einheit wird hierzu zwischen zwei i.A. elastischen mechanischen Systemen angebracht, z.B. in Form eines Maschinenlagers. Alternativ kann auch die Kombination mit einem passiven Lager vorteilhaft sein, oder die Einheit wird als tragendes Element in einer elastischen Struktur eingesetzt (F. Döngi, Adaptive Structures in High Precision Satellites, Modelling and Control of Adaptive Mechanical Structures, Fortschtritt-Berichte, VDI, Reihe 11, Nr. 268, S. 429 ff.).

Die an der Aktor-Sensor-Einheit vorliegende dynamische Kraft wird im Messverstärker 13 durch Auswertung der Änderung des Kleinsignalwiderstands in eine hierzu proportionale Spannung umgesetzt.

Der hier beschriebene Regler besteht hauptsächlich aus einem integrierenden Glied 14 (A. Preumont, Vibration and Control of Active Structures, 2nd Ed., Kluwer Academic Publishers, 2002). Die Anwendung anderer Regler ist jedoch ebenso möglich (D. Mayer, Regelung und Identifikation aktiver mechanischer Strukturen mit adaptiven digitalen Filtern, Dissertation, TU Darmstadt, 2003).

Das im Regler verarbeitete Signal wird nachfolgend mit einem geeigneten Leistungsverstärker 15 für den (hier: piezoelektrischen) Aktor verstärkt und der Aktor entsprechend angesteuert.

Eine besonders kompakte Ausführung der Aktor-Sensor-Einheit ergibt sich bei Verwendung von Ringstapelaktoren (Figuren 10 und 11), die entsprechend mit sensorischen Schichten ausgestattet werden. Durch eine durchgeführte Schraube 12 (Figur 11) wird der Aktor mechanisch vorgespannt, wobei der DLC-Sensor zur Messung der Vorspannung eingesetzt werden kann.

Im dynamischen Betrieb kann später der Sensor zur Messung der vorliegenden Kräfte an der Aktor-Sensor-Einheit herangezogen werden. Sofern die Steifigkeitsverhältnisse zwischen Vorspannschraube 12 und Aktor geeignet gewählt werden, ist mit diesem Konzept auch eine aktive Vibrationsdämpfung (z.B. dem obigen Beispiel entsprechend) möglich.

## Patentansprüche

1. Kraftmessvorrichtung, umfassend eine auf einem Träger angeordnete amorphe Kohlengtoffschicht (1) mit piezoresistiven Eigenschaften, **dadurch gekennzeichnet, dass** der Träger ausgewählt ist aus der gruppe bestehend aus Festkörperaktoren, Piezostapelaktoren elektromagnetischen, hydraulischen und/oder pneumatischen Aktoren.

2. Kraftmessvorrichtung nach den vorausgehenden Anspruch, **dadurch gekennzeichnet, dass** die amorphen Kohlenstoffe (1) ausgewählt sind aus der Gruppe bestehend aus a-C, a-:CH, i-CH, a-C:H:Me, DLC (Diamon Like Carbons), Me:DLC und/oder Mischungen hieraus.

3. Kraftmessvorrichtung nach einem oder mehreren der vorausgehenden Ansprüche, **dadurch gekennzeichnet, dass** die amorphe Kohlenstoffschicht (1) zumindest teilweise sp³-gebundenen Kohlenstoff aufweist.

4. Kraftmessvorrichtung nach einem oder mehreren der vorausgehenden Ansprüche, **dadurch gekennzeichnet, dass** die Dicke der amorphen Kohlenstoffschicht (1) zwischen 0,1 und 30 µm, bevorzugt zwischen 1 und 10 µm beträgt.

5. Kraftmessvorrichtung nach einem oder mehreren der vorausgehenden Ansprüche, **dadurch gekennzeichnet, dass** die amorphe Kohlenstoffschicht (1) eine Härte von mindestens 10 GPa, vorzugsweise von mindestes 15 GPa aufweist.

6. Kraftmessvorrichtung nach einem oder mehreren der vorausgehenden Ansprüche, **dadurch gekennzeichnet, dass** die amorphe Kohlenstoffschicht (1) thermisch bis mindestens 150 °C, vorzugsweise bis mindestens 200 °C belastbar ist.

7. Kraftmessvorrichtung nach einem oder mehreren der vorausgehenden Ansprüche, **dadurch gekennzeichnet, dass** die amorphe Kohlenstoffschicht (1) eine Steifigkeit von kleiner 10 nm/kN aufweist.

8. Kraftmessvorrichtung nach einem oder mehreren der vorausgehenden Ansprüche, **dadurch gekennzeichnet, dass** zwischen dem Träger (4) und der amorphen Kohlenstoffschicht (1) eine Metallschicht (2) angeordnet ist.

9. Kraftmessvorrichtung nach dem vorausgehenden Anspruch, **dadurch gekennzeichnet, dass** zwischen dem Träger und der Metallschicht (2) eine Isolationsschicht und/oder eine Verschleißschutzschicht (6) enthalten ist.

10. Kraftmessvorrichtung nach vorausgehendem Anspruch, dass die Isolationsschicht und/oder Verschleißschutzschicht (6) die Materialien AlN und/oder Al₂O₃ enthält.

11. Kraftmessvorrichtung nach einem oder mehreren der vorausgehenden Ansprüche, **dadurch gekennzeichnet, dass** auf der amorphen Kohlenstoffschicht (1) lokale Elektrodenstrukturen (5) aufgebracht sind.

12. Kraftmessvorrichtung nach einem oder mehreren der vorausgehenden Ansprüche, **dadurch gekennzeichnet, dass** das in die Kraftmessvorrichtung ein Temperatursensor (10) integriert ist.

13. Kraftmessvorrichtung nach einem oder mehreren der Ansprüche 11 und 12, **dadurch gekennzeichnet, dass** die lokalen Elektrodenstrukturen (5) und/oder die Temperatursensoren (10) auf einer Folie vorstrukturiert sind.

14. Kraftmessvorrichtung nach einem oder mehreren der vorausgehenden Ansprüche, **dadurch gekennzeichnet, dass** die Kraftmessvorrichtung als Ring (3) ausgeführt ist.

15. Verfahren zur Messung einer Kraft mithilfe einer Kraftmessvorrichtung nach einem oder mehreren der Ansprüche 1 bis 14, **dadurch gekennzeichnet, dass** eine Widerstandsmessung der piezoresistiven Schicht (1) erfolgt.

16. Verfahren nach Anspruch 15, **dadurch gekennzeichnet, dass** die Messung der Kraft vollflächig über die ganze Kraftmessvorrichtung erfolgt.

17. Verfahren nach Anspruch 15, **dadurch gekennzeichnet, dass** die Messung der Kraft ortsaufgelöst erfolgt.

18. Verfahren nach einem oder mehreren der Ansprüche 15 bis 17, dadurch gekenntzeichnet, dass eine Messung einer statischen Kraft erfolgt.

19. Verfahren nach einem oder mehreren der Ansprüche 15 bis 17, **dadurch gekennzeichnet, dass** eine Messung einer dynamischen Kraft erfolgt.

20. Verfahren nach einem oder mehreren der Ansprüche 15 bis 19, **dadurch gekennzeichnet, dass** der Stromfluss durch die piezoresistive Schicht (1) über die Metallschicht (2) abgegriffen wird.

21. Verwendung einer Kraftmessvorrichtung nach einem oder mehreren der Ansprüche 1 bis 14 in adaptronischen Systemen ausgewählt aus der Gruppe bestehend aus aktiven Strukturinterfaces, vorspannungsgeregelten Wälzlagern, Haltekraftregelungen, Werkzeugmaschinen, Druckwalzen, Dämpfungsvorrichtungen\ und/oder Justiervorrichtungen.

22. Verwendung einer Kraftmessvorrichtung nach einem oder mehreren der Ansprüche 1 bis 14 in einem aktiven Vibrationsdämpfungssystem.

23. Verwendung einer Kraftmessvorrichtung nach einem oder mehreren der Ansprüche 1 bis 14 in lokalen Kraftmesszellen und kraftsensorischen Netzwerken.

## Claims

1. Force measuring device comprising an amorphous carbon layer which is disposed on a carrier and has piezoresistive properties, wherein the carrier is selected of the group consisting of solid actuators, piezoelectric stack actuators, electromagnetic, hydraulic and/or pneumatic actuators.

2. Force measuring device according to the preceding claims, **characterised in that** the amorphous carbons (1) are selected from the group comprising a-C, a-:CH, i-CH, a-C:H:Me, DLC (diamond-like carbons), Me:DLC and/or mixtures hereof.

3. Force measuring device according to one or more of the preceding claims, **characterised in that** the amorphous carbon layer (1) has at least partially sp³-bonded carbon.

4. Force measuring device according to one or more of the preceding claims, **characterised in that** the thickness of the amorphous carbon layer (1) is between 0.1 and 30 µm, preferably between 1 and 10 µm.

5. Force measuring device according to one or more of the preceding claims, **characterised in that** the amorphous carbon layer (1) has a hardness of at least 10 GPa, preferably of at least 15 GPa.

6. Force measuring device according to one or more of the preceding claims, **characterised in that** the amorphous carbon layer (1) can be loaded thermally up to at least 150°C, preferably up to at least 200°C.

7. Force measuring device according to one or more of the preceding claims, **characterised in that** the amorphous carbon layer (1) has a rigidity of less than 10 nm/kN.

8. Force measuring device according to one or more of the preceding claims, **characterised in that** a metal layer (2) is disposed between the carrier (4) and the amorphous carbon layer (1).

9. Force measuring device according to one or more of the preceding claims, **characterised in that** an insulation layer and/or a wear protection layer (6) is contained between the carrier (4) and the metal layer (2).

10. Force measuring device according to the preceding claim, **characterised in that** the insulation layer and/or wear protection layer (6) contains the materials AlN and/or Al₂O₃.

11. Force measuring device according to one or more of the preceding claims, **characterised in that** local electrode structures (5) are applied on the amorphous carbon layer (1).

12. Force measuring device according to one or more of the preceding claims, **characterised in that** a temperature sensor (10) is integrated into the force measuring device.

13. Force measuring device according to one or more of the claims 10 and 12, **characterised in that** the local electrode structures (5) and/or the temperature sensors (10) are pre-structured on a foil.

14. Force measuring device according to one or more of the preceding claims, **characterised in that** the force measuring device is configured as a ring (3).

15. Method for measuring a force with the help of a force measuring device according to one or more of the claims 1 to 14, **characterised in that** a resistance measurement of the piezoresistive layer (1) is effected.

16. Method according to claim 15, **characterised in that** the measurement of the force is effected over the entire surface via the entire force measuring device.

17. Method according to claim 15, **characterised in that** the measurement of the force is effected with local resolution.

18. Method according to one or more of the claims 15 to 17, **characterised in that** a measurement of a static force is effected.

19. Method according to one or more of the claims 15 to 17, **characterised in that** a measurement of a dynamic force is effected.

20. Method according to one or more of the claims 15 to 19, **characterised in that** the current flow through the piezoresistive layer is tapped via the metal layer.

21. Use of a force measuring device according to one or more of the claims 1 to 14 in adaptronic systems selected from the group comprising active structure interfaces, pre-tension-controlled roller bearings, retaining force controls, machine tools, printing rollers, damping devices and/or adjustment devices.

22. Use of a force measuring device according to one or more of the claims 1 to 14 in an active vibration damping system.

23. Use of a force measuring device according to one or more of the claims 1 to 14 in local force measuring cells and force-sensing networks.

## Revendications

1. Dispositif dynamométrique, comprenant une couche de carbone amorphe (1) à propriétés piézorésistantes, disposée sur un support, **caractérisé en ce que** le support est choisi dans le groupe consistant en des actionneurs de corps fixes, des piézoactionneurs en pile, des actionneurs électromagnétiques, hydrauliques et/ou pneumatiques.

2. Dispositif dynamométrique selon la revendication précédente, **caractérisé en ce que** les carbones amorphes (1) sont choisis dans le groupe consistant en a-C, a-:CH, i-CH, a-C:H:Me, DLC (Diamond Like Carbons), Me:DLC ou des mélanges de ceux-ci.

3. Dispositif dynamométrique selon une ou plusieurs des revendications précédentes, **caractérisé en ce que** la couche de carbone amorphe (1) comprend au moins en partie du carbone à l'état lié sp3.

4. Dispositif dynamométrique selon une ou plusieurs des revendications précédentes, **caractérisé en ce que** l'épaisseur de la couche de carbone amorphe (1) est comprise entre 0,1 et 30 µm, de préférence entre 1 et 10 µm.

5. Dispositif dynamométrique selon une ou plusieurs des revendications précédentes, **caractérisé en ce que** la couche de carbone amorphe (1) présente une dureté d'au moins 10 GPa, de préférence d'au moins 15 GPa.

6. Dispositif dynamométrique selon une ou plusieurs des revendications précédentes, **caractérisé en ce que** la couche de carbone amorphe (1) peut être sollicitée thermiquement jusqu'à au moins 150 °C, de préférence jusqu'à au moins 200 °C.

7. Dispositif dynamométrique selon une ou plusieurs des revendications précédentes, **caractérisé en ce que** la couche de carbone amorphe (1) présente une rigidité inférieure à 10 nm/kN.

8. Dispositif dynamométrique selon une ou plusieurs des revendications précédentes, **caractérisé en ce qu'**entre le support (4) et la couche de carbone amorphe (1) est disposée une couche de métal (2).

9. Dispositif dynamométrique selon la revendication précédente, **caractérisé en ce qu'**entre le support (4) et la couche de métal (2) est contenue une couche d'isolation et/ou une couche de protection anti-usure (6).

10. Dispositif dynamométrique selon la revendication précédente, **caractérisé en ce que** la couche d'isolation et/ou la couche de protection anti-usure (6) contiennent les matériaux AlN et/ou Al₂O3.

11. Dispositif dynamométrique selon une ou plusieurs des revendications précédentes, **caractérisé en ce que** sur la couche de carbone amorphe (1) sont appliquées des structures locales d'électrodes (5).

12. Dispositif dynamométrique selon une ou plusieurs des revendications précédentes, **caractérisé en ce qu'**un capteur de température (10) est intégré au dispositif dynamométrique.

13. Dispositif dynamométrique selon une ou plusieurs des revendications 11 et 12, **caractérisé en ce que** les structures locales d'électrodes (5) et/ou les capteurs de température (10) sont préstructurés sur un film.

14. Dispositif dynamométrique selon une ou plusieurs des revendications précédentes, **caractérisé en ce que** le dispositif dynamométrique est réalisé sous la forme d'un anneau (3).

15. Procédé de mesure d'une force à l'aide d'un dispositif dynamométrique selon une ou plusieurs des revendications 1 à 14, **caractérisé en ce que** s'effectue une mesure de résistance de la couche piézorésistante (1).

16. Procédé selon la revendication 15, **caractérisé en ce que** la mesure de la force s'effectue sur toute la surface par-dessus l'ensemble du dispositif dynamométrique.

17. Procédé selon la revendication 15, **caractérisé en ce que** la mesure de la force s'effectue en résolution spatiale.

18. Procédé selon une ou plusieurs des revendications 15 à 17, **caractérisé en ce que** s'effectue la mesure d'une force statique.

19. Procédé selon une ou plusieurs des revendications 15 à 17, **caractérisé en ce que** s'effectue la mesure d'une force dynamique.

20. Procédé selon une ou plusieurs des revendications 15 à 19, **caractérisé en ce que** le flux de courant à travers la couche piézorésistante (1) est capté par l'intermédiaire de la couche de métal (2).

21. Utilisation d'un dispositif dynamométrique selon une ou plusieurs des revendications 1 à 14 dans des systèmes adaptroniques, choisis dans le groupe consistant en les interfaces actives de structure, les roulements à précharge régulée, les régulations de force de maintien, les machines-outils, les rouleaux presseurs, les dispositifs d'amortissement et/ou les dispositifs d'ajustement.

22. Utilisation d'un dispositif dynamométrique selon une ou plusieurs des revendications 1 à 14 dans un système actif d'amortissement de vibrations.

23. Utilisation d'un dispositif dynamométrique selon une ou plusieurs des revendications 1 à 14 dans des cellules dynamométriques locales ou des réseaux de détection de forces.
